(19) Europäisches Patentamt
European Patent Office
Office européen des brevets

(11) Veröffentlichungsnummer: **0 163 233**
**B1**

(12) **EUROPÄISCHE PATENTSCHRIFT**

(45) Veröffentlichungstag der Patentschrift: **27.09.89**

(51) Int. Cl.⁴: **C 07 F 9/50,** C 07 C 87/30, C 07 C 87/68

(21) Anmeldenummer: **85106183.8**

(22) Anmeldetag: **21.05.85**

(54) **Quartäre Ammoniumsalze sulfonierter Triarylphosphine.**

(30) Priorität: **01.06.84 DE 3420493**

(43) Veröffentlichungstag der Anmeldung: **04.12.85 Patentblatt 85/49**

(45) Bekanntmachung des Hinweises auf die Patenterteilung: **27.09.89 Patentblatt 89/39**

(84) Benannte Vertragsstaaten: **DE FR GB IT NL SE**

(56) Entgegenhaltungen:
**EP-A- 0 104 967**
**EP-A- 0 107 006**
**DE-A- 2 733 516**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Bahrmann, Helmut, Dr. Dipl.-Chem., Rohstrasse 48, D-4236 Hamminkeln 3 (DE)**
Erfinder: **Cornils, Boy, Dr. Dipl.-Chem., Friedrich-Ebert-Strasse 45, D-4220 Dinslaken (DE)**
Erfinder: **Lipps, Wolfgang, Dr. Dipl.-Chem., Falkestrasse 76, D-4200 Oberhausen 11 (DE)**
Erfinder: **Lappe, Peter, Dr. Dipl.-Chem., Zum Ravenhorst 9, D-4200 Oberhausen 11 (DE)**
Erfinder: **Springer, Helmut, Dipl.-Ing., Drostenkampstrasse 24, D-4200 Oberhausen 11 (DE)**

**EP 0 163 233 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue quartäre Ammoniumsalze mono-, di- und trisulfonierter Triarylphosphine.

Sulfonierte Triarylphosphine und ihre Salze sind bekannt. So erhält man das Na-salz der Diphenylphosphinphenyl-m-sulfonsäure durch Behandlung von Triphenylphosphin mit Oleum und anschließende Neutralisation des Reaktionsgemisches mit gesättigter Natriumhydroxid-Lösung (Ahrland, Chatt J. Chem. Soc. 1958, 276). Durch Variation der Reaktionsbedingungen, insbesondere der Reaktionszeit und der Reaktionstemperatur sowie des Verhältnisses von Triphenylphosphin zu Schwefeltrioxid lassen sich auch die di- und trisulfonierten Verbindungen Phenylphosphindi-(m-phenyl)sulfonsäure und Triphenylphosphin-tri-(m-sulfonsäure) bzw. deren Salze herstellen.

Das vorstehend beschriebene Sulfonierungsverfahren eignet sich nicht nur zur Einführung von $SO_3H$-Resten in die Phenylgruppen des Triphenylphosphins, es kann auch zur Sulfonierung substituierter Phenylgruppen wie der Tolyl-, Xylyl-, Chlorophenylgruppe angewandt werden. Ebenso lassen sich nach dieser Arbeitsweise auch kondensierte aromatische Kohlenwasserstoffreste in Triarylphosphinen, wie der Naphthylrest sulfonieren.

Durch Neutralisation des Sulfonierungsgemisches mit anderen Basen als Natriumhydroxid können das Kaliumsalz, die Erdalkalisalze und andere Salze hergestellt werden. Die Behandlung z.B. des Natriumsalzes mit einem Kationenaustauscher ergibt die freie Sulfonsäure. Ihre Neutralisation mit Hydroxiden oder Carbonaten ist der Weg zur Herstellung weiterer Salze, Blei-, Zink-, Kupfer-, Ammonium-, quartäre Ammoniumsalze der allgemeinen Formel $N(R_1R_2R_3R_4)^+$, in der $R_1$, $R_2$, $R_3$, $R_4$ jeweils eine geradkettige oder verzweigte $C_1$–$C_4$-Alkylgruppe bedeuten, können so in Form ihrer wäßrigen Lösungen und nach Eindampfen unter vermindertem Druck als Feststoffe gewonnen werden.

Zur Reindarstellung der Salze hat es sich bewährt, nach einem Verfahren zu arbeiten, das in der DE-OS 3 235 030 beschrieben ist. Hiernach wird das Sulfonierungsprodukt mit der Lösung eines wasserunlöslichen Amins in einem wasserunlöslichen Lösungsmittel behandelt. Das nunmehr in der organischen Phase vorliegende sulfonierte Triarylphosphin wird mit der wäßrigen Lösung einer Base wieder in die wäßrige Phase überführt, aus der es schließlich isoliert werden kann.

Ein weiteres Verfahren zur Herstellung sulfonierter Triarylphosphine ist Gegenstand der EP-Al-0 104 967. Es besteht darin, die Sulfonierungsprodukte mit Hilfe organischer Phosphorverbindungen, nämlich Estern bestimmter Säuren des Phosphors, Phosphinoxiden oder Diphosphindioxiden aus dem Reaktionsgemisch zu extrahieren. Auf diesem Wege lassen sich unter anderem auch quartäre Ammoniumsalze gewinnen, namentlich erwähnt werden lediglich die Tetramethyl-, Tetrapropyl- und Tetrabutylverbindungen.

Die Salze sulfonierter Triarylphosphine finden auf verschiedenen Gebieten der chemischen Technik Anwendung. Nach der GB-PS 1 006 261 setzt man sie photographischen Emulsionen als Mittel zur Verhinderung der Schleierbildung zu. In der DE-PS 2 733 516 ist ein Verfahren zum Telomerisieren von Dienen durch Umsetzung eines Diens mit einer Verbindung mit beweglichem Wasserstoffatom in Gegenwart eines Katalysators beschrieben, der aus einem Übergangsmetall, insbesondere Palladium oder einer Übergangsmetallverbindung der 8. Gruppe des Periodensystems und einem wasserlöslichen Triarylphosphin der allgemeinen Formel $P(C_6H_4\ SO_3M)_n(C_6H_5)_{3-n}$ besteht. Die Anlagerung von Cyanwasserstoff an organische Verbindungen, die mindestens eine ethylenische Doppelbindung enthalten, erfolgt nach der DE-PS 2 700 904 in Gegenwart eines Katalysatorsystems, das neben einer Verbindung des Nickels, Eisens oder Palladiums ein Triphenylphosphinsulfonat enthält. Das in der DE-PS 2 627 354 beschriebene Verfahren zur Herstellung von Aldehyden durch Anlagerung von Kohlenmonoxid und Wasserstoff an Olefine verwendet als Katalysator neben Rhodium wasserlösliche sulfonierte Arylphosphine.

Gegenstand der vorliegenden Erfindung sind neue quartäre Ammoniumsalze mono-, di- oder trisulfonierte Triarylphosphine der allgemeinen Formel

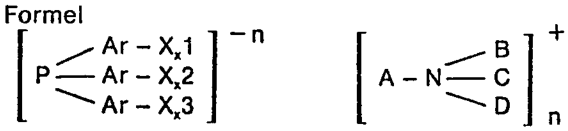

wobei Ar für eine Phenylgruppe und X für eine Sulfogruppe steht, $x^1$, $x^2$, $x^3$ 0 oder 1 bedeutet mit der Maßgabe, daß mindestens eine Zahl $x^1$, $x^2$, $x^3$ 1 ist, A für einen Alkylrest mit 6 bis 25 Kohlenstoffatomen, für einen Phenylrest oder einen Benzylrest steht, B, C und D geradkettige oder verzweigte Alkylreste mit 1 bis 4 Kohlenstoffatomen sind und n eine ganze Zahl zwischen 1 und 3 ist.

Alkylreste, für die A steht sind z.B. der Hexyl-, Octyl-, Dodecyl- und der Hexadecylrest. Die Alkylreste B, C und D können z.B. Methyl, Ethyl, Propyl, i-Propyl, Butyl und i-Butyl sein.

Die Herstellung der neuen Verbindungen kann unmittelbar aus dem bei der Sulfonierung von Triarylphosphinen anfallenden Reaktionsgemisch erfolgen. Hierzu wird das Sulfonierungsprodukt unter Einhaltung einer Temperatur von 0 bis 90 °C, insbesondere 20 bis 40 °C, mit soviel Wasser versetzt, daß eine 0,5 bis 60 Gew.%, vorzugsweise 25 bis 35 Gew.% Schwefelsäure enthaltende Lösung entsteht. Zu dieser wäßrigen Lösung gibt man das in einem wasserunlöslichen organischen Lösungsmittel gelöste wasserunlösliche Amin. Die Konzentration des Amins beträgt 0,5 bis 35 Gew.%, vorzugsweise 10 bis 30 Gew.% und insbesondere 15 bis 25 Gew.%. Je Äquivalent Sulfonsäure wendet man 0,5 bis 1,5 Mol, vorzugsweise 0,8 bis 1,2 Mol Amin an. Die beiden flüssigen Phasen werden intensiv gemischt. Dabei geht das

sulfonierte Arylphosphin als Aminsalz in die organische Phase über, während nicht umgesetzte Schwefelsäure in der wäßrigen Phase verbleibt. Die organische Phase wird abgetrennt.

Zur Gewinnung des quartären Ammoniumsalzes wird das in der organischen Phase gelöste Aminsalz mit der Lösung einer ihm äquivalenten Menge quartären Ammoniumhydroxids in Wasser umgesetzt. Man erhält auf diesem Wege eine wäßrige Lösung des quartären Ammoniumsalzes. Das wasserunlösliche Amin wird im organischen Lösungsmittel gelöst zurückgewonnen und kann erneut eingesetzt werden. Es hat sich bewährt, das in Wasser gelöste quartäre Ammoniumhydroxid der organischen Phase anteilsweise zuzusetzen, z.B. bis ein bestimmter, vorher zu ermittelnder pH-Wert erreicht ist und die jeweils erhaltenen wäßrigen Phasen getrennt aufzuarbeiten. Die für die Umwandlung des Aminsalzes in das Ammoniumsalz benötigten Mengen quartäre Ammoniumhydroxide können entweder unter Berücksichtigung der Zusammensetzung der Aminsalze rechnerisch oder durch entsprechende Vorversuche bestimmt werden. Bei der Durchführung der Vorversuche werden entsprechend kleine pH-Wert-Änderungen in Abhängigkeit des Verbrauches an Ammoniumhydroxid gemessen und die jeweils getrennt erhaltenen wäßrigen Phasen analysiert. Statt die das Aminsalz enthaltende organische Phase ausschließlich mit der wäßrigen Lösung des quartären Ammoniumhydroxids umzusetzen, kann man zur Entfernung geringer Sulfatmengen zunächst wäßrige Alkalihydroxidlösung einsetzen. Auch in diesem Falle empfiehlt es sich, die Zugabe bis zur Erreichung eines bestimmten, ebenfalls vorher zu ermittelnden pH-Wertes vorzunehmen. Die Wasserphase wird abgetrennt und darauf die organische Phase mit der entsprechenden Menge quartären Ammoniumhydroxid versetzt.

Zur Herstellung besonders reiner Verbindungen führt man das in der organischen Phase gelöste Aminsalz nicht unmittelbar in das quartäre Ammoniumsalz über, sondern stellt zunächst durch Reaktion mit der entsprechenden Base ein anderes Salz z.B. ein Alkali- oder Erdalkalisalz her. Mit Erfolg setzt man auch in diesem Falle fraktioniert um und arbeitet die einzelnen Fraktionen getrennt auf. Dadurch gelingt es, die Produkte verschiedener Sulfonierungsstufen sowie Phosphinoxide und Phosphinsulfide voneinander zu trennen. Durch Eindampfen oder Kristallisieren gewinnt man das Salz in fester Form und kann es durch Umkristallisieren weiterreinigen. Anschließend wird es in Wasser gelöst, durch Ansäuern mit verdünnter Mineralsäure, insbesondere Schwefelsäure in die freie Sulfonsäure überführt, wie oben beschrieben, als Aminsalz extrahiert und zum quartären Ammoniumsalz umgesetzt.

Bei dem vorstehend beschriebenen Verfahren zur Herstellung neuer Verbindungen können wasserunlösliche homo- und heterocyclische aliphatische, aromatische, araliphatische und vorzugsweise offenkettige, verzweigte oder unverzweigte aliphatische Amine mit 10 bis 60, vorzugsweise 13 bis 36 Kohlenstoffatomen verwendet werden. Weniger geeignet sind Amine, deren Salze mit den sulfonierten Arylphosphinen in dem organischen Lösungsmittel nicht oder nur beschränkt löslich sind. Mit Erfolg verwendete Amine sind z.B. Tri-n-octylamin, Ti-iso-octylamin, Tri-2-ethylhexylamin, Methyl-di-octylamin, Tri-dodecylamin.

Als wasserunlösliche organische Lösungsmittel geeignet sind insbesondere aliphatische oder aromatische Kohlenwasserstoffe oder Kohlenwasserstoffgemische, z.B. Toluol oder kerosinähnliche Fraktionen, daneben auch $C_4$–$C_{20}$-Alkohole oder $C_6$–$C_{20}$-Ether.

Die quartären Ammoniumhydroxide werden in Form wäßriger Lösungen angewandt wie sie bei der Herstellung aus den entsprechenden Salzen durch Umsetzung mit Anionenaustauschern oder aus den Halogeniden durch Umsetzung mit Silberhydroxid entstehen.

Für viele Anwendungszwecke können unmittelbar die bei der Herstellung anfallenden wäßrigen Lösungen der quartären Ammoniumsalze der sulfonierten Triarylphosphine eingesetzt werden.

Zur Gewinnung der kristallinen Salze dampft man ihre wäßrigen Lösungen unter vermindertem Druck bei 10 bis 50 mbar ($1 \cdot 10^3$ bis $5 \cdot 10^3$ Pa) ein.

Die neuen Verbindungen bilden farblose Kristalle, die sich in Wasser leicht lösen. Sie sind außerdem löslich in niederen Alkoholen und schwer- oder unlöslich in Toluol, Aceton, Tetrahydrofuran und Acetonitril.

Quartäre Ammoniumsalze entsprechend der Erfindung finden insbesondere als Bestandteil wasserlöslicher Katalysatorsysteme, die daneben noch Metalle, insbesondere Edelmetalle enthalten, bei der Umsetzung organischer Verbindungen im Zweiphasensystem Anwendung, die aus organischer und wäßriger Phase bestehen. Sie fördern die Löslichkeit des organischen Substrats in der wäßrigen Phase und tragen so zur Erhöhung des Umsatzes bei. Ihre äußerst geringe Löslichkeit in der organischen Phase hat zur Folge, daß mit dem organischen Reaktionsprodukt die Metallkomponente des Katalysators nicht oder nur in vernachlässigbar kleiner Menge zusammen mit dem Reaktionsprodukt aus der Reaktionszone ausgetragen wird. Insbesondere bei Einsatz von Edelmetallkatalysatoren ist diese Eigenschaft der neuen Verbindungen von erheblicher Bedeutung, weil in vielen Fällen eine vollständige oder annähernd vollständige Rückgewinnung des Edelmetalls über Wirtschaftlichkeit oder Unwirtschaftlichkeit eines Verfahrens entscheidet.

Als Bestandteil von Katalysatorsystemen haben sich vor allem quartäre Ammoniumsalze entsprechend der oben wiedergegebenen allgemeinen Formel bewährt, in der Ar eine Phenyl- oder Naphthylgruppe, die Summe von $x^1$, $x^2$ und $x^3$ 2 oder 3 und B, C und D die gleichen geradkettigen oder verzweigten Alkylgruppen mit ein bis vier Kohlenstoffatomen bedeuten.

Durch die folgenden Beispiele wird die Erfindung näher erläutert, nicht aber in ihrem Schutzumfang begrenzt. Die verwendeten Abkürzungen haben folgende Bedeutung:

TPPMS: Triphenylphosphinmonosulfonsäuresalz
DS: Triphenylphosphindisulfonsäure-salz
TS: Triphenylphosphintrisulfonsäure-salz
OMS: Triphenylphosphinoxidmonosulfonsäure-salz
ODS: Triphenylphosphinoxiddisulfonsäure-salz
OTS: Triphenylphosphinoxidtrisulfonsäure-salz
SDS: Triphenylphosphinsulfiddisulfonsäure-salz
STS: Triphenylphosphinsulfidtrisulfonsäure-salz

Beispiel 1

Herstellung von TPPDS (Na-Salz)

In einem mit Rührer, Thermometer, Tropftrichter und Kühler ausgestatteten 1 l-Kolben werden 1280 g 30%iges Oleum (D = 1,94) vorgelegt und unter Stickstoff auf eine Innentemperatur von 15 °C abgekühlt. Danach setzt man im Verlauf von 2 Stunden 105 g (0,4 mol) Triphenylphosphin unter Rühren ein und hält die Reaktionstemperatur zwischen 15 und 20 °C. Nach beendeter Zugabe wird das Reaktionsgemisch noch 3,5 Stunden bei 20 °C weitergerührt.

Anschließend wird der Kolbeninhalt unter Stickstoff-Schutz in einen 2505 g Wasser von etwa 10 °C enthaltenden 6 l-Kolben gegeben. Während der Zugabe wird die Innentemperatur durch intensive Außenkühlung zwischen 20 und 40 °C gehalten.

Die Reaktionslösung hat folgende Zusammensetzung (m = 3890 g):

| | Masse (g) | mMol | Mol.-% |
|---|---|---|---|
| TPPDS | 117,8 | 253 | 64,6 |
| TS | 30,3 | 53 | 13,5 |
| ODS | 26,0 | 54 | 13,8 |
| OTS | 8,6 | 15 | 3,8 |
| SDS | 8,2 | 17 | 4,3 |

Das homogene Sulfonierungsgemisch obiger Zusammensetzung wird in einem 6 l-Kolben in Stickstoffatmosphäre unter Rühren mit einer Mischung aus 303 g (858 mMol) Triisooctylamin und 1212 g Toluol versetzt. Nach beendeter Zugabe rührt man 30 Minuten weiter und läßt 30 Minuten absitzen. Die untere Phase (3665 g wäßrige Schwefelsäure) wird abgetrennt und verworfen.

Die organische Phase (1731 g) hat folgende Zusammensetzung:

| | Masse (g) | mMol | Mol.-% |
|---|---|---|---|
| TPPDS | 116,4 | 250 | 66,8 |
| TS | 29,1 | 51 | 13,6 |
| ODS | 24,2 | 50 | 13,4 |
| OTS | 4,3 | 7 | 1,9 |
| SDS | 7,9 | 16 | 4,3 |

Das Extraktionsprodukt wird anschließend in einem 4 l-Kolben unter Rühren und in Stickstoffatmosphäre sukzessive mit 3%iger wäßriger Natronlauge versetzt. Die pH-Messung erfolgt mit einer handelsüblichen Glaselektrode. Bei Erreichen des gewünschten pH-Wertes wird die Zugabe der Natronlauge unterbrochen. Das sich bildende zweiphasige System aus Triisooctylamin, Toluol und dem Natriumsalz der sulfonierten Triphenylphosphine sowie der entsprechenden Phosphinoxide und Phosphinsulfide wird getrennt und die wasserfreie organische Phase erneut mit wäßriger Natronlauge versetzt. Die organische Phase wird entweder verworfen oder erneut zur Extraktion von Sulfonierungsgemischen verwendet. Die im pH-Bereich von 6,0–6,6 bei 22 °C abgetrennte Salzlösung (848 g) wird etwa 16 Stunden in Stickstoffatmosphäre bis zur vollständigen Kristallisation gerührt und anschließend mit 400 ml Methanol versetzt. Durch Filtration mit einer Glasfritte wird der Kristallbrei von der Mutterlauge befreit, mit Methanol gewaschen und im Vakuum getrocknet.

Man erhält eine feinkristalline, weiße Substanz folgender Zusammensetzung:

TPPDS: 90,92%
TS: 0,61%
ODS: 0,83%
SDS: 1,21%
$H_2O$: 5,8%
P(III): 1,97 Mol/kg

Beispiel 2

Herstellung von TPPTS (Na-Salz)

In einem 1 l-Kolben werden gemäß Beispiel 1 1280 g 30%iges Oleum vorgelegt. Innerhalb von 2 Stunden werden 105 g (0,4 mol) Triphenylphosphin zugegeben. Danach wird noch 24 Stunden bei 20 °C gerührt.

Das Reaktionsgemisch wird anschließend zu 2502 g Wasser von 10 °C gegeben, man erhält 3887 g Sulfonierungsgemisch folgender Zusammensetzung:

| | Masse (g) | mMol | Mol.-% |
|---|---|---|---|
| TPPDS | 62,2 | 133 | 33,0 |
| TS | 117,6 | 207 | 51,4 |
| ODS | 12,0 | 25 | 6,2 |
| OTS | 17,5 | 30 | 7,4 |
| STS | 4,7 | 8 | 2,0 |

Das homogene Sulfonierungsgemisch obiger Zusammensetzung wird gemäß Beispiel 1 mit einer Mischung aus 388 g (1099 mMol) Triisooctylamin und 1552 g Toluol versetzt. Nach Phasentrennung erhält man 3660 g einer wäßrigen Schwefelsäurelösung und 2167 g organische Phase folgender Zusammensetzung:

| | Masse (g) | mMol | Mol.-% |
|---|---|---|---|
| TPPDS | 61,9 | 133 | 34,3 |
| TS | 117,5 | 207 | 53,4 |
| ODS | 11,5 | 24 | 6,2 |
| OTS | 10,2 | 17 | 4,4 |
| STS | 4,4 | 7 | 1,7 |

Die Sulfatkonzentration in der organischen Phase beträgt 1,44 Gew.-%.

Gemäß Beispiel 1 wird das Extraktionsprodukt sukzessive mit 10%iger wäßriger Natronlauge reextrahiert.

Die im pH-Bereich von 5,3 bis 5,9 bei 24 °C abgetrennte Salzlösung (482 g) wird mit Hilfe eines Rotationsverdampfers auf 250 g eingeengt und anschließend 12 Stunden bei Raumtemperatur gerührt. Durch Filtration mit einer Glasfritte wird der Kristallbrei von der Mutterlauge befreit, mit Methanol gewaschen und im Vakuum getrocknet.

Man erhält einen weißen, feinkristallinen Feststoff folgender Zusammensetzung:

TPPDS: 4,20%
TS: 91,40%
ODS: 0,50%
OTS: 0,27%
SDS: 0,06%
STS: 0,73%
$H_2O$: 2,5%
P(III): 1,698 Mol/kg

Beispiel 3
Herstellung von TPPTS-Benzyltrimethylammoniumsalz

$$P(C_6H_4SO_3)_3\ [(C_6H_5CH_2)N(CH_3)_3]_3$$

In einem 4 l-Dreihalskolben werden in Stickstoffatmosphäre 50 g TPPTS-Na-Salz (hergestellt gemäß Beispiel 2) unter Rühren in 250 g Wasser gelöst und mit 940 g 10%iger Schwefelsäure versetzt. Anschließend wird eine Mischung aus 70,6 g (200 mMol) Triisooctylamin und 282,4 g Toluol zugetropft. Nach beendeter Zugabe rührt man 15 Minuten weiter und läßt 15 Minuten absitzen. Die untere Phase (1193 g wäßrige Schwefelsäure) wird abgetrennt und verworfen.

Die organische Phase (388 g) wird in einem 1 l-Kolben unter Rühren und in Stickstoffatmosphäre bis zum Erreichen eines pH-Wertes von 4,75 bei 26 °C mit 10%iger Natronlauge versetzt. Das sich bildende zweiphasige System wird abgetrennt und die verbleibende wasserfreie organische Phase zweimal mit je 100 g $H_2O$ gewaschen. Nach Phasentrennung wird die organische Phase mit 73,3 g (176 mMol) einer 40%igen wäßrigen Benzyltrimethylammoniumhydroxid-Lösung versetzt (pH-Wert 6,0), die abgetrennte Salzlösung (107 g) hat folgende Zusammensetzung:

| | Masse (g) | mMol | Mol.-% 1) |
|---|---|---|---|
| TPPDS | 1,9 | 4,1 | 7,6 |
| TS | 27,5 | 48,4 | 89,5 |
| OTS | 0,1 | 0,2 | 0,4 |
| SDS | 0,1 | 0,2 | 0,4 |
| STS | 0,7 | 1,2 | 2,1 |

1) als Na-Salz berechnet

Die Salzlösung wird mit Hilfe eines Rotationsverdampfers im Vakuum eingeengt und der verbleibende hochviskose Rückstand aus Methanol umkristallisiert. Man erhält einen weißen, kristallinen Feststoff folgender Zusammensetzung:

TPPDS: 2,27%[2]
TS: 94,30%
STS: 1,26%
P(III): 1,03 Mol/kg
N: 4,31%
Na: 0,055%

[2] als Benzyltrimethylammonium-Salz

Beispiel 4
Herstellung von TPPTS-Phenyltrimethylammonium-Salz

$$P(C_6H_4SO_3)_3\ [H_5C_6N(CH_3)_3]_3$$

Gemäß Beispiel 3 werden 50 g TPPTS-Na-Salz (hergestellt nach Beispiel 2) unter Rühren in 250 g Wasser gelöst und mit 940 g 10%iger Schwefelsäure versetzt. Nach Zugabe von 70,6 g (200 mMol) Triisooctylamin und 282,4 g Toluol wird 15 Minuten weitergerührt. Nach Phasentrennung wird die verbleibende organische Phase (390 g) gemäß Beispiel 3 bis zum Erreichen eines pH-Wertes von 4,7 mit 10%iger Natronlauge reextrahiert, danach wird die organische Phase zweimal mit Wasser gewaschen und schließlich mit 114,4 g (187 mMol) einer 25%igen wäßrigen Phenyltrimethylammoniumhydroxid-Lösung versetzt (pH: 6,7).

Die abgetrennte Salzlösung (146 g) hat folgende Zusammensetzung:

| | Menge (g) | mMol | Mol.-% 1) |
|---|---|---|---|
| TPPDS | 2,1 | 4,5 | 7,0 |
| TS | 31,9 | 56,2 | 89,0 |
| OTS | 0,2 | 0,3 | 0,5 |
| SDS | 0,2 | 0,4 | 0,6 |
| STS | 1,5 | 2,5 | 3,9 |

1) als Na-Salz berechnet

Die Salzlösung wird im Vakuum vom Wasser befreit und der verbleibende Rückstand wird aus i-Propanol/Essigester umkristallisiert. Man erhält einen weißen, kristallinen Feststoff folgender Zusammensetzung:

TPPDS: 4,03%[1]
TS: 90,83%
STS: 1,90%
P(III): 1,04 Mol/kg
N: 4,48%
Na: 0,055%

[1] als Phenyltrimethylammonium-Salz

Beispiel 5
Herstellung von TPPTS-Dodecyldimethylethylammonium-Salz

$$P(C_6H_4SO_3)_3\ [H_{25}C_{12}N(CH_3)_2(C_2H_5)]_3$$

Gemäß Beispiel 3 werden 50 g TPPTS-Na-Salz (hergestellt gemäß Beispiel 2) unter Rühren in 250 g Wasser gelöst und mit 940 g 10%iger Schwefelsäure versetzt. Nach Zugabe von 70,6 g (200 mMol) Triisooctylamin und 282,4 g Toluol wird 15 Minuten weitergerührt.

Nach Phasentrennung wird die verbleibende organische Phase (387 g) gemäß Beispiel 3 bis zum Erreichen von pH 4,7 mit 10%iger Natronlauge reextrahiert, danach zweimal mit je 100 g Wasser gewaschen und schließlich mit 231 g (178 mMol) einer 20%igen wäßrigen Dodecyldimethylethylammoniumhydroxid versetzt (pH: 6,3).

Die abgetrennte Salzlösung (275 g) hat folgende Zusammensetzung:

| | Menge (g) | mMol | Mol.-% [1)] |
|---|---|---|---|
| TPPDS | 1,8 | 3,9 | 7,0 |
| TS | 28,3 | 49,8 | 89,6 |
| SDS | 0,1 | 0,2 | 0,4 |
| STS | 1,0 | 1,7 | 3,0 |

[1)] als Na-Salz berechnet

Die Salzlösung wird im Vakuum vom Wasser befreit und der verbleibende hochviskose Rückstand über $P_2O_5$ im Vakuum getrocknet. Man erhält einen weißen kristallinen Feststoff folgender Zusammensetzung:

TPPDS: 2,95%[2]
TS: 90,35%
STS: 2,71%
P(III): 0,77 Mol/kg
N: 3,33%
Na: 0,055%

[2] als Dodecyldimethylethylammonium-Salz

Beispiel 6
Herstellung von TPPDS-Benzyltrimethylammonium-Salz

$$(H_5C_6)P(C_6H_4SO_3)_2\ [(C_6H_5CH_2)N(CH_3)_3]_2$$

Gemäß Beispiel 3 werden 50 g TPPDS-Na-Salz (hergestellt nach Beispiel 1) unter Rühren zu 250 g Wasser gegeben und mit 817 g 10%iger Schwefelsäure versetzt. Der Feststoff geht hierbei in Lösung. Anschließend wird eine Mischung aus 60 g (170 mMol) Triisooctylamin und 240,0 g Toluol zugetropft. Nach beendeter Zugabe rührt man 15 Minuten weiter und läßt 15 Minuten absitzen. Die untere Phase (1073 g wäßrige Schwefelsäure) wird abgetrennt und verworfen. Die organische Phase (338 g) wird in einem 1 l-Kolben unter Rühren und Stickstoffschutz bis zum Erreichen eines pH-Wertes von 4,8 bei 23 °C mit 3%iger Natronlauge versetzt. Das sich bildende zweiphasige System wird abgetrennt und die verbleibende organische Phase zweimal mit je 100 g Wasser gewaschen. Nach Phasentrennung wird die organische Phase mit 68,6 g (164 mMol) einer 40%igen wäßrigen Benzyltrimethylammoniumhydroxid-Lösung versetzt (pH-Wert 6,1), die abgetrennte Salzlösung (108 g) hat folgende Zusammensetzung:

| | Menge (g) | mMol | Mol.-% [1)] |
|---|---|---|---|
| TPPDS | 37,5 | 80,5 | 98,3 |
| ODS | 0,3 | 0,6 | 0,7 |
| SDS | 0,4 | 0,8 | 1,0 |

[1)] als Na-Salz berechnet

Die Salzlösung wird im Vakuum zur Trocknung eingedampft, der verbleibende Rückstand, ein weißer, kristalliner Feststoff, hat folgende Zusammensetzung:

TPPDS: 93,75%[1]
ODS: 1,19%
SDS: 1,08%
P(III): 1,33 Mol/kg
N: 3,81%
Na: 0,05%

[1] als Benzyltrimethylammonium-Salz

Beispiel 7
Herstellung von TPPDS-Phenyltrimethylammonium-Salz

$$(H_5C_6)P(C_6H_4SO_3)_2\ [(H_5C_6)N(CH_3)_3]_2$$

Gemäß Beispiel 6 werden 50 g TPPDS-Na-Salz (hergestellt nach Beispiel 1) unter Rühren mit 250 g Wasser und anschließend mit 817 g 10%iger Schwefelsäure versetzt. Nach Zugabe von 60,0 g (170 mMol) Triisooctylamin und 240,0 g Toluol wird 15 Minuten weitergerührt.

Nach Phasentrennung wird die verbleibende organische Phase (337 g) gemäß Beispiel 6 bis zum Erreichen eines pH-Wertes von 4,7 mit 3%iger Natronlauge reextrahiert, danach zweimal mit je 100 g Wasser gewaschen und schließlich mit 98,7 g (161 mMol) einer 25%igen wäßrigen Phenyltrimethylammoniumhydroxid-Lösung versetzt (pH; 6,2).

Die abgetrennte Salzlösung (138 g) hat folgende Zusammensetzung:

| | Menge (g) | mMol | Mol.-% [1)] |
|---|---|---|---|
| TPPDS | 37,3 | 80,0 | 98,3 |
| ODS | 0,3 | 0,6 | 0,7 |
| SDS | 0,4 | 0,8 | 1,0 |

[1)] als Na-Salz berechnet.

Die Salzlösung wird im Vakuum zur Trocknung eingedampft, der verbleibende Rückstand, ein weißer, kristalliner Feststoff, hat folgende Zusammensetzung:

TPPDS: 96,94%[2]
SDS: 1,18%
P(III): 1,38 Mol/kg
N: 3,99%
Na: 0,04%

[2] als Phenyltrimethylammonium-Salz

Beispiel 8
Herstellung von TPPDS-Dodecyldimethylethylammonium-Salz

$$(H_5C_6)P(C_6H_4SO_3)_2\ [(H_{25}C_{12})N(CH_3)_2(C_2H_5)]_2$$

Gemäß Beispiel 6 werden 50 g TPPDS-Na-Salz (hergestellt nach Beispiel 1) unter Rühren zuerst mit 250 g $H_2O$ und darauf mit 817 g 10%iger Schwefelsäure versetzt. Nach Zugabe von 60 g (170 mMol) Triisooctylamin und 240,0 g Toluol wird 15 Minuten weitergerührt. Nach Phasentrennung wird die verbleibende organische Phase (340 g) gemäß Beispiel 6 bis zum Erreichen von pH 4,9 mit 3%iger Natronlauge reextrahiert, danach zweimal mit je 200 g Wasser gewaschen und schließlich mit 200 g (154 mMol) einer 20%igen wäßrigen Dodecyldimethylethylammoniumhydroxid-Lösung versetzt (pH: 6,5).

Die abgetrennte Salzlösung (280 g) hat folgende Zusammensetzung:

| | Menge (g) | mMol | Mol.-% [1)] |
|---|---|---|---|
| TPPDS | 35,9 | 77,0 | 97,2 |
| ODS | 0,6 | 1,2 | 1,5 |
| SDS | 0,5 | 1,0 | 1,3 |

[1)] als Na-Salz berechnet

Die Salzlösung wird im Vakuum zur Trocknung eingedampft, der verbleibende Rückstand, ein weißer Feststoff, hat folgende Zusammensetzung:

TPPDS: 94,95%[1]
SDS: 1,17%
P(III): 1,04 Mol/kg
N: 3,01%
Na: 0,05%

[1] als Dodecyldimethylammonium-Salz

Beispiel 9
Herstellung von TPPMS-Benzyltrimethylammoniumsalz

$$(H_5C_6)_2P(C_6H_4SO_3)\ [(C_6H_5CH_2N(CH_3)_3]$$

In einem 1 l-Kolben werden gemäß Beispiel 1 1000 g 25%iges Oleum vorgelegt und auf 20 °C abgekühlt. Im Verlauf von 2 Stunden werden 204 g (0,78 mol) Triphenylphosphin unter Rühren zugegeben. Danach wird noch 2 Stunden bei 20 °C gerührt.

Das Reaktionsgemisch wird anschließend zu 3012 g Wasser von 10–15 °C gegeben, man erhält 4216 g Sulfonierungsgemisch folgender Zusammensetzung:

| | Masse (g) | mMol | Mol.-% |
|---|---|---|---|
| TPP | 81,2 | 310 | 39,6 |
| TPPMS | 140,4 | 386 | 49,4 |
| DS | 25,4 | 55 | 7,0 |
| TS | 0,5 | 1 | 0,1 |
| OMS | 10,1 | 27 | 3,5 |
| ODS | 1,5 | 3 | 0,4 |

Das homogene Sulfonierungsgemisch obiger Zusammensetzung wird gemäß Beispiel 1 mit einer Mischung aus 552 g (1,56 mol) Triisooctylamin und 2208 g Toluol versetzt. Nach Phasentrennung erhält man 3895 g einer wäßrigen Schwefelsäurelösung und 3079 g organische Phase folgender Zusammensetzung:

| | Masse (g) | mMol | Mol.-% |
|---|---|---|---|
| TPP | 80,7 | 308 | 39,6 |
| TPPMS | 140,2 | 385 | 49,5 |
| DS | 25,4 | 55 | 7,1 |
| TS | 0,4 | 1 | 0,1 |
| OMS | 9,7 | 26 | 3,3 |
| ODS | 1,3 | 3 | 0,4 |

Die Sulfatkonzentration in der organischen Phase beträgt 3,30 Gew.-%.

Das Extraktionsprodukt wird gemäß Beispiel 1 sukzessive bis pH 6,0 mit 8%iger Natronlauge, daran anschließend bis pH 7,0 mit 3%iger Natronlauge und schließlich mit 118 g (283 mmol) einer 40%igen wäßrigen Benzyltrimethylammoniumhydroxid-Lösung reextrahiert.

Die abgetrennte Salzlösung (221 g) hat folgende Zusammensetzung:

| | Masse (g) | mMol | Mol.-% [1)] |
|---|---|---|---|
| TPPDS | 0,8 | 1,7 | 0,6 |
| MS | 97,4 | 267,6 | 95,4 |
| OMS | 4,2 | 11,1 | 4,0 |

[1)] als Na-Salz berechnet

Die Salzlösung wird mit Hilfe eines Rotationsverdampfers im Vakuum eingeengt, der beim Abkühlen ausfallende Feststoff wird abfiltriert, mit wenig kaltem Methanol gewaschen und im Vakuum getrocknet.

Man erhält einen weißen kristallinen Feststoff folgender Zusammensetzung:

TPPMS: 98%[2]
P(III): 1,97 Mol/kg
N: 2,76%
Na: 0,04%
$H_2O$: 0,27%

[2] als Benzyltrimethylammoniumsalz

Beispiel 10
Herstellung von TPPMS-Phenyltrimethylammoniumsalz

$$(H_5C_6)_2P(C_6H_4SO_3)\ [(C_6H_5N(CH_3)_3]$$

Die gemäß Beispiel 9 erhaltene organische Phase (3000 g) mit der im Beispiel 9 angegebenen Zusammensetzung wird sukzessive bis pH 6,0 mit 8%iger Natronlauge daran anschließend bis pH 7,0 mit 3%iger Natronlauge und schließlich mit 171,0 g (279 mmol) einer 25%igen wäßrigen Phenyltrimethylammoniumhydroxid-Lösung reextrahiert. Die abgetrennte Salzlösung (273 g) hat folgende Zusammensetzung:

| | Masse (g) | mMol | Mol.-% [1)] |
|---|---|---|---|
| TPPDS | 0,7 | 1,33 | 0,5 |
| MS | 95,6 | 262,6 | 95,4 |
| OMS | 4,3 | 11,3 | 4,1 |

[1)] als Na-Salz berechnet

Der beim Stehenlassen bei RT auskristallisierende Feststoff wird abfiltriert, mit wenig kaltem Methanol gewaschen und im Vakuum getrocknet. Man erhält einen weißen kristallinen Feststoff folgender Zusammensetzung:

TPPMS: 98%[2]
P(III): 2,04 Mol/kg
N: 2,83%
Na: 0,003%
$H_2O$: 1,81%

[2] als Phenyltrimethylammonium-Salz.

**Patentansprüche**

1. Quartäre Ammoniumsalze mono-, di- oder trisulfonierter Triarylphosphine der allgemeinen Formel

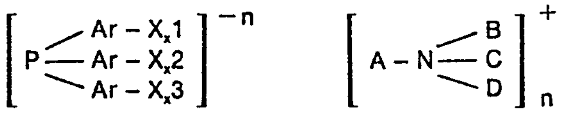

wobei Ar für eine Phenylgruppe und X für eine Sulfogruppe steht, $x^1$, $x^2$, $x^3$ 0 oder 1 bedeutet mit der Maßgabe, daß mindestens eine Zahl $x^1$, $x^2$, $x^3$ 1 ist, A für einen Alkylrest mit 6 bis 25 Kohlenstoffatomen, für einen Phenylrest oder einen Benzylrest steht, B, C und D geradkettige oder verzweigte Alkylreste mit 1 bis 4 Kohlenstoffatomen sind und n eine ganze Zahl zwischen 1 und 3 ist.

2. Verfahren zur Herstellung quartärer Ammoniumsalze nach Anspruch 1, durch Sulfonierung von Triarylphosphinen mit Oleum, dadurch gekennzeichnet, daß man das bei der Sulfonierung anfallende Reaktionsgemisch mit Wasser versetzt, zu der entstandenen wäßrigen Lösung gegebenenfalls nach vorheriger Reinigung in einem wasserunlöslichen organischen Lösungsmittel gelöstes wasserunlösliches Amin gibt, die beiden flüssigen Phasen zunächst intensiv mischt, dann sich trennen läßt, die organische Phase abtrennt, mit der wäßrigen Lösung eines quartären Ammoniumhydroxids mischt und aus der abgetrennten wäßrigen Phase durch Eindampfen im Vakuum das quartäre Ammoniumsalz gewinnt.

3. Verfahren nach Anspruch 2, dadurch gekennzeichnet, daß das bei der Sulfonierung anfallende Reaktionsgemisch bei 0 bis 90 °C, vorzugsweise 20 bis 40 °C mit soviel Wasser versetzt wird, daß eine 0,5 bis 50 Gew.%, vorzugsweise 25 bis 35 Gew.% Schwefelsäure enthaltende Lösung entsteht.

4. Verfahren nach Anspruch 2, dadurch gekennzeichnet, daß die wäßrige Lösung des bei der Sulfonierung anfallenden Reaktionsgemisches mit einer 0,5 bis 35 Gew.%, vorzugsweise 10 bis 30 Gew.% und insbesondere 15 bis 25 Gew.% wasserunlösliches Amin in einem wasserunlöslichen Lösungsmittel enthaltenden Lösung intensiv gemischt wird.

5. Verfahren nach Anspruch 2 und 4, dadurch gekennzeichnet, daß man je Äquivalent Sulfonsäure 0,5 bis 1,5 Mol, vorzugsweise 0,8 bis 1,2 Mol Amin anwendet.

6. Verfahren nach Anspruch 2, dadurch gekennzeichnet, daß aus der wäßrigen Lösung des bei der Sulfonierung anfallenden Reaktionsgemisches durch gegebenenfalls fraktionierte Neutralisation mit einem Alkali- oder Erdalkalihydroxid und Eindampfen das entsprechende Salz hergestellt und durch Umkristallisieren gereinigt wird, anschließend in Wasser gelöst, durch Ansäuern in die freie Sulfonsäure überführt und aus der wäßrigen Lösung als Aminsalz extrahiert wird.

**Claims**

1. Quaternary ammonium salts of mono, di or trisulfonated triarylphosphines of the general formula:

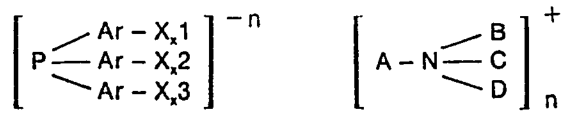

where Ar denotes a phenyl group and X a sulfogroup, $x^1$, $x^2$, $x^3$ stand for 0 or 1 with at least one number $x^1$, $x^2$ or $x^3$ being 1, A stands for an alkyl group with 6 to 25 carbon atoms, for a phenyl group or a benzyl group, B, C and D are straight-chain or branched alkyl groups with 1 to 4 carbon atoms and n is an integer between 1 and 3.

2. A process for preparing quaternary ammonium salts according to claim 1 by the sulfonation of triarylphosphines with oleum, characterised in that the reaction mixture formed during sulfonation is mixed with water, a water-insoluble amine dissolved in a water-insoluble organic solvent is added to the aqueous solution thus formed, optionally after prior cleaning, the two liquid are initially intensively mixed, left to separate, the organic phase is removed, mixed with the aqueous solution of a quaternary ammonium hydroxide, and the quaternary ammonium salt is recovered from the separated aqueous phase by evaporation in a vacuum.

3. A process according to claim 2, characterised in that the reaction mixture formed during sulfonation is mixed at 0 to 90 °C, preferably 20 to 40 °C with enough water to form a solution containing 0.5 to 50% by weight, preferably 25 to 35% by weight of sulfuric acid.

4. A process according to claim 2, characterised in that the aqueous solution of the reaction mixture formed during sulfonation is intensively mixed with a solution containing 0.5 to 35% by weight, preferably 10 to 30% by weight and in particular 15 to 25% by weight of water-insoluble amine in a water-insoluble solvent.

5. A process according to claims 2 and 4, characterised in that 0.5 to 1.5 moles, preferably 0.8 to 1.2 moles of amine per equivalent of sulfonic acid are used.

6. A process according to claim 2, characterised in that from the aqueous solution of the reaction mixture formed during sulfonation the corresponding salt is prepared by optionally fractionated neutralisation with an alkali or alkaline earth hydroxide and evaporation, said salt being then cleaned by recrystallisation, then dissolved in water, converted into the free sulfonic acid by acidification and extracted from the aqueous solution as an amine salt.

**Revendications**

1. Sels d'ammonium quaternaire de triarylphosphines mono-, di- ou tri-sulfonées de formule générale

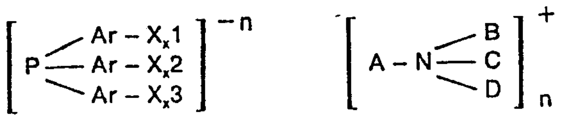

dans laquelle Ar représente un groupe phényle et X un groupe sulfo, $x^1$, $x^2$, $x^3$ sont égaux à 0 ou 1, étant spécifié toutefois que l'un au moins des indices $x^1$, $x^2$, $x^3$ est égal à 1, A représente un groupe alkyle en $C_6$–$C_{25}$, un groupe phényle ou un groupe benzyle, B, C et D représentent des groupes alkyle à chaîne droite ou ramifiée en $C_1$–$C_4$ et n est un nombre entier allant de 1 à 3.

2. Procédé de préparation des sels d'ammonium quaternaire selon la revendication 1, par sulfonation de triarylphosphines par l'oléum, caractérisé en ce que l'on ajoute de l'eau au mélange de réaction obtenu à la sulfonation, on ajoute ensuite à la solution aqueuse obtenue, éventuellement après purification, une amine insoluble dans l'eau en solution dans un solvant organique insoluble dans l'eau, on soumet d'abord les deux phases liquides à mélange intensif puis on les laisse se séparer, on sépare la phase organique, on la mélange avec la solution aqueuse d'un hydroxyde d'ammonium quaternaire et on isole le sel d'ammonium quaternaire par évaporation sous vide de la phase aqueuse séparée.

3. Procédé selon la revendication 2, caractérisé en ce que, au mélange de réaction obtenu à la sulfonation, on ajoute, à des températures de 0 à 90 °C, de préférence de 20 à 40 °C, de l'eau en quantité suffisante pour former une solution contenant de 0,5 à 50% en poids, de préférence de 25 à 35% en poids d'acide sulfurique.

4. Procédé selon la revendication 2, caractérisé en ce que l'on soumet la solution aqueuse du mélange de réaction obtenu à la sulfonation à mélange intensif avec une solution contenant de 0,5 à 35% en poids, de préférence de 10 à 30% en poids et plus spécialement de 15 à 25% en poids d'une amine insoluble dans l'eau dans un solvant insoluble dans l'eau.

5. Procédé selon les revendications 2 et 4, caractérisé en ce que l'on utilise de 0,5 à 1,5 moles, de préférence de 0,8 à 1,2 moles d'amine par équivalent d'acide sulfonique.

6. Procédé selon la revendication 2, caractérisé en ce que, à partir de la solution aqueuse du mélange de réaction obtenu à la sulfonation, par neutralisation éventuellement fractionnée au moyen d'un hydroxde alcalin ou alcalino-terreux suivie d'une évaporation, on prépare le sel correspondant qu'on purifie par recristallisation, qu'on redissout ensuite dans l'eau, qu'on convertit par acidification en l'acide sulfonique libre, qu'on extrait de la solution aqueuse à l'état de sel d'amine.